# EUROPEAN PATENT APPLICATION

(11) **EP 2 071 696 A2**
(43) Date of publication of application: **17.06.2009**
(21) Application number: 08163182.2
(22) Date of filing: 28.08.2008
(51) Int. Cl.: H02J 7/04

(54) **Control apparatus for a battery circuit, charging control apparatus controlling charging current and electronic device using the same**

(30) Priority: 14.12.2007 JP 2007323924; 09.01.2008 JP 2008002095
(71) Applicant: Fujitsu Limited, Kawasaki-shi, Kanagawa 211-8588 (JP)
(72) Inventor: Okumura, Masafumi, Kanagawa 211-8588 (JP); Fukuda, Hideo, Kanagawa (JP)
(74) Representative: Stebbing, Timothy Charles

(57) **Abstract**

A control apparatus (22) that controls a battery circuit (11-1...,11-4), including a voltage detector that detects a battery voltage, a battery protection circuit (13) that stops charging current when the battery voltage detected by the voltage detecting unit (14) exceeds a protection voltage, and a charging circuit (23) being capable of changing a charging current value for charging a battery. The control apparatus includes an input interface that reads the battery voltage detected by the voltage detecting unit, a decision unit that decides whether or not the read battery voltage has approached the protection voltage to a predetermined limit value, an output interface that outputs a signal for controlling the charging current, and a current control unit that limits the charging current to a predetermined limit value via the output interface when the read battery voltage is decided to have approached the protection voltage to the predetermined limit value.

## Description

The present invention relates to a charging control technique for a battery.

A secondary battery having an upper limit of charging voltage is equipped with a protection circuit that monitors battery voltage so as to prevent overcharge of the battery and that stops the charging operation if the battery voltage exceeds the upper limit voltage.

Further, the charging operation of the secondary battery is performed by using a charging circuit. The charging circuit is a constant current and constant voltage circuit, which can control charging current and charging voltage. In this case, charging control is performed so that the charging voltage does not exceed a predetermined upper limit voltage.

However, monitoring of the battery voltage by the protection circuit and monitoring of the charging voltage by the charging circuit may have an error. Therefore, although the charged state is not actually a full charge state, the charging operation may be stopped due to errors in the protection circuit and the charging circuit, resulting in an insufficient charged state.

It is therefore desirable to provide a charging control technique that enables to charge a secondary battery to a desired charged state by reducing the influence of a detection error as described above when the secondary battery having a protection circuit is charged.

In one aspect of the present invention, a control apparatus for a battery circuit is provided that includes a voltage detector that detects a battery voltage, a battery protection circuit that stops charging current when the battery voltage detected by the voltage detecting unit exceeds a protection voltage, and a charging circuit being capable of changing a charging current value for charging a battery. The control apparatus includes an input interface that reads the battery voltage detected by the voltage detecting unit, a decision unit that decides whether or not the read battery voltage has approached the protection voltage to (within) a predetermined limit value, an output interface that outputs a signal for controlling the charging current, and a current control unit that limits the charging current to a predetermined limit value via the output interface when the read battery voltage is decided to have approached the protection voltage to (within) the predetermined limit value.

According to this structure, the charging current is restricted in the state where the battery voltage is close to a protection voltage. Thus, it is possible to avoid as much as possible a situation where the battery voltage exceeds the protection voltage so that the charging current is stopped.

Here, the battery is made up of a plurality of cell blocks connected in series, each of which includes one cell or a plurality of cells, and the voltage detecting unit may include a measuring circuit that detects a voltage of each of the cell blocks. As a result, the decision unit decides whether or not a voltage of any one of the cell blocks has approached the protection voltage of the cell block to (within) the predetermined limit value, and the current control unit only needs to limit the charging current if the voltage of any one of the cell blocks is decided to have approached the protection voltage of the cell block to (within) the predetermined limit value. According to this structure, it is possible to decide whether or not a voltage of each cell block has approached the protection voltage of the cell block to (within) the predetermined limit value. In other words, it can be decided whether or not the charging current should be limited based on a voltage of not the entire battery but each of the cell blocks. Preferably, the current control unit decreases the charging current along with a decrease in a difference between the voltage of any one of the cell blocks and the protection voltage of the cell block.

In another aspect of the invention, a control apparatus for a battery circuit that includes a voltage detector that detects a battery voltage, a battery protection circuit that stops charging current when the battery voltage detected by the voltage detecting unit exceeds a protection voltage, and a charging circuit being capable of changing a charging current value for charging a battery, may include an input interface that inputs a signal indicating an operating state of the battery protection circuit, an output interface that outputs a signal for controlling the charging current, a protection state decision unit that decides whether or not the battery protection circuit has stopped the charging current, a voltage state decision unit that decides whether or not the battery voltage has reached the protection voltage, after the battery protection circuit stopped the charging current, and a charging control unit that cancels a stopping process of the charging current performed by the battery protection circuit and restarts the charging with the charging current limited to a predetermined limit value via the output interface when the battery voltage has not reached the protection voltage. In other words, if the battery voltage has not reached the protection voltage after the battery protection circuit stopped the charging current once, the stopping process of the charging current performed by the battery protection circuit is cancelled and the charging is restarted with the charging current limited to a predetermined limit value via the output interface, and hence the charging for the battery can be continued as long as possible.

In addition, another aspect may be a charging control apparatus that is a combination of the control apparatus and the battery circuit. Still another aspect may be an electronic device that is a combination of the battery, the charging control apparatus and a load.

Thus, when the secondary battery equipped with the protection circuit is charged, an influence of the detection error as described above can be reduced so as to increase a possibility of charging the secondary battery to a desired charged state.
Reference is made, by way of example only, to the accompanying drawings in which:
FIG. 1 is a diagram illustrating an example of a hardware structure of an electronic device.
FIG. 2 is a block diagram illustrating an example of a structure of a charging circuit.
FIG. 3 illustrates an example of an operation of a charging control apparatus.
FIG. 4 is a diagram illustrating a conventional control sequence performed by a microcomputer.
FIG. 5 is a diagram illustrating changes of current and voltage without protection by a protection circuit.
FIG. 6 is a diagram illustrating changes of current and voltage when the protection circuit works.
FIG. 7 is a diagram illustrating changes of current and voltage upon a charging control according to a first embodiment.
FIG. 8 is a diagram illustrating a charging control process according to the first embodiment.
FIG. 9 is a diagram illustrating details of a charging current decreasing control process.
FIG. 10 illustrates an example in which a charging current is decreased stepwise over time.
FIG. 11 illustrates an example in which when a charging voltage reaches a specified voltage, the charging current is decreased substantially to be close to zero, and further the charging current is increased stepwise.
FIG. 12 is a diagram illustrating an example of a reset process of the protection circuit.
FIG. 13 illustrates an example of a detailed structure of the electronic device.
FIG. 14 is a diagram illustrating an example of the charging control process according to a third embodiment.

Hereinafter, a charging circuit of a secondary battery and an electronic device using the charging circuit according to embodiments will be described with reference to the attached drawings. The structure of the embodiments described below is merely an example, and the technology is not limited to the structure of the embodiments.

### «First embodiment»

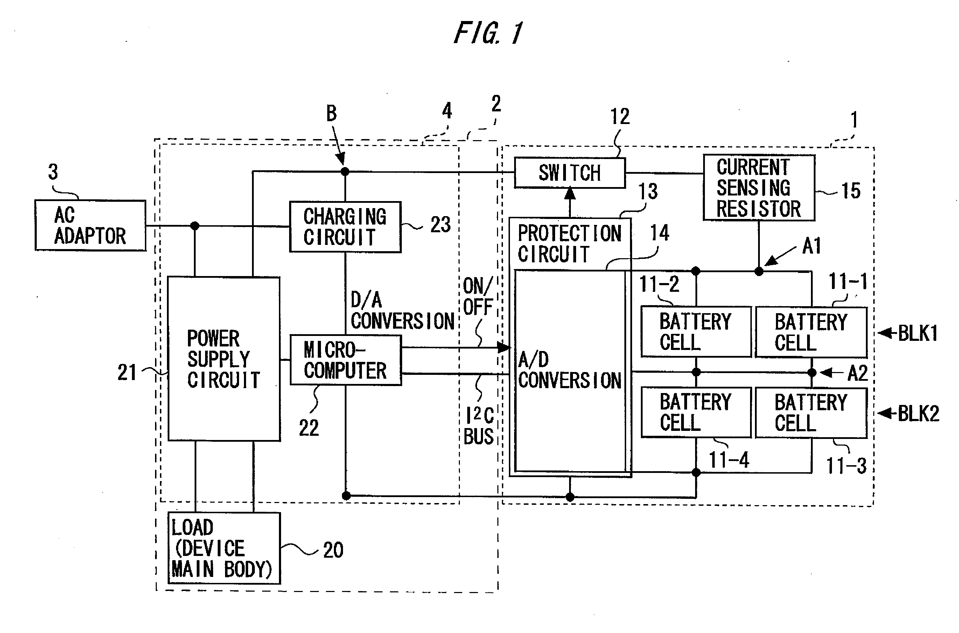

Hereinafter, the charging circuit and the electronic device will be described with reference to FIGS. 1 to 9. FIG. 1 is a diagram illustrating an example of a hardware structure of the electronic device. This electronic device is a portable device such as a notebook type (or a laptop type) personal computer, a personal digital assistant, a mobile phone, a portable game machine, an electronic dictionary, a portable music player, a portable video player, a portable television receiver, a portable radio and the like.

This electronic device includes a battery pack 1 and a main body part 2 connected to the battery pack 1 to be supplied with electric power from the battery pack 1. The battery pack 1 may have a form of being embedded in the main body part 2 or a form of being coupled externally to the main body part 2. Note that the main body part 2 can also be supplied with electric power through an AC adaptor 3 from a commercial AC power source.

The battery pack 1 (corresponding to a battery) includes a plurality of battery cells 11-1 to 11-4. In this example, the battery cells 11-1 and 11-2 are connected in parallel so as to form a battery cell block BLK1. In addition, the battery cells 11-3 and 11-4 are connected in parallel so as to form a battery cell block BLK2. In addition, the battery cell blocks BLK1 and BLK2 are connected in series.

However, although FIG. 1 shows the battery cells 11-1 to 11-4, the number of battery cells is not limited to four. In addition, the battery cell block is not limited to the structure of two battery cells. Three or more battery cells may be connected in series or in parallel so as to form the battery cell block. In addition, three or more battery cell blocks may be connected in series or in parallel so as to form the battery pack. Hereinafter, if the battery cell is referred to collectively, it is simply referred to as a battery cell 11.

The battery cell 11 of the battery pack 1 is supplied with electric power for charging from an external terminal via a switch 12 and a current sensing resistor 15. The switch 12 is a semiconductor switch such as a transistor or the like.

The switch 12 is controlled by a control signal from a protection circuit 13 (corresponding to a battery protection circuit) to be turned on or off. The protection circuit 13 is supplied with a digital signal from an A/D converter 14 (corresponding to a voltage detector) for detecting a voltage of the battery cell 11. Here, a voltage of the battery in which the cell blocks BLK1 and BLK2 are connected in series (a potential at a point A1 shown in FIG. 1) is subjected to A/D conversion, which is transmitted to the protection circuit 13.

Then, the protection circuit 13 compares the battery voltage from the A/D converter 14 with a predetermined reference value (hereinafter referred to as a protection voltage) so as to output a signal for turning on or off the switch 12. The protection circuit 13 may be made up of a microcomputer and a control program. However, it may be simply made up of a comparator that compares an analog signal that is a voltage value at the point A1 shown in FIG. 1 (a voltage before the A/D conversion) with an analog reference voltage, and a circuit that turns on or off the switch 12 based on an output signal from the comparator. In any case, the protection circuit 13 turns off the switch 12 when a voltage of any one of cells (cell blocks) of the battery pack 1 made up of the battery cell 11 connected in series and in parallel becomes a predetermined protection voltage. Therefore, the protection circuit 13 prevents the battery cell 11 from being charged excessively. This process is referred to as an overcharge protection process.

Note that the A/D converter 14 performs A/D conversion of the voltage at the point A1 as well as voltages of individual battery cell blocks, and transmits a result of the A/D conversion to the main body part 2 via an I2C bus. In addition, the current sensing resistor 15 generates a voltage drop proportional to the charging current. The A/D converter 14 also performs the A/D conversion of a voltage across the current sensing resistor 15 and transmits a result of the A/D conversion to the main body part 2 via the I2C bus. The I2C bus is a serial interface bus line. In addition, although the structure using the I2C bus is exemplified in this charging circuit, the electric connection between the main body part 2 and the A/D converter 14 is not limited to the I2C bus.

The main body part 2 includes a load 20 and a power supply control unit 4 that controls electric power to be supplied to the load 20 and electric power for charging the battery pack 1. In addition, the power supply control unit 4 includes a power supply circuit 21 that supplies electric power to the load 20, a charging circuit 23 that charges the battery pack 1, and a microcomputer 22 that controls the power supply circuit 21 and the charging circuit 23.

The load 20 is a main part for realizing functions of the electronic device. The power supply circuit 21 is a so-called constant voltage circuit, e.g., a DC to DC converter or the like. The power supply circuit 21 converts a voltage from the battery pack 1 or a voltage from the AC adaptor 3 into a voltage specified for the load 20.

The charging circuit 23 is a constant voltage constant current circuit, which charges the battery pack 1 by the electric power from the AC adaptor 3 according to a control signal from the microcomputer 22. In the example shown in FIG. 1, the control signal from the microcomputer 22 is an analog signal after D/A conversion performed by a D/A converter.

The microcomputer 22 (corresponding to the control unit) has a CPU, a memory, an interface of I2C or the like (corresponding to the input interface), the D/A converter and its output terminal (corresponding to the output interface) and the like, which are not shown in the figure. The CPU of the microcomputer 22 performs the program on the memory so as to generate a control signal for the power supply circuit 21 and the charging circuit 23.
For instance, the microcomputer 22 monitors voltages at individual parts of the battery cell 11 (the cell blocks at the points A1, A2 and the like, the current sensing resistor 15 and the like) via the circuit connected to the I2C bus (corresponding to the measuring circuit). Then, the microcomputer 22 controls the voltage and the current for charging the battery pack 1 via the charging circuit 23 according to the monitored voltages.

In addition, the microcomputer 22 supplies an ON and OFF signal to an ON and OFF input terminal of the protection circuit 13 so that the switch 12 can be switched to the OFF state. In the ON state, the protection circuit 13 performs the overcharge protection process described above. In the OFF state on the contrary, the switch 12 is remained in the turned off state regardless of a state of the overcharge protection process performed by the protection circuit 13.

Further, a so-called hysteresis is set in the decision of the overcharge in the overcharge protection process performed by the protection circuit 13. For instance, when the charging voltage becomes 4.25 volts, the overcharge protection process works so that the switch 12 is turned off. In this case, the overcharge protection process does not stop so that the switch 12 is maintained to be turned off until the charging voltage becomes 4.20. When the charging voltage becomes 4.20 volts or lower, the overcharge protection process stops so that the switch 12 is turned on. Therefore, there is the hysteresis of 0.05 volts in this case between the charging voltage of 4.25 volts for deciding the start of the overcharge protection process and the charging voltage of 4.20 volts for deciding the end of the overcharge protection process.

In this embodiment, when the microcomputer 22 turns off the ON and OFF input terminal of the protection circuit 13, the protection circuit 13 maintains the switch 12 in the turned off state as it is. On this occasion, the protection circuit 13 works without a hysteresis (however, the switch 12 is maintained in the turned off state). In addition, the microcomputer 22 turns off the protection circuit 13 and then turns on the same so that the protection circuit 13 restarts the action of turning on or off the switch 12 without a hysteresis according to a voltage of the cell block. If the switch 12 is turned on once, the hysteresis is formed.

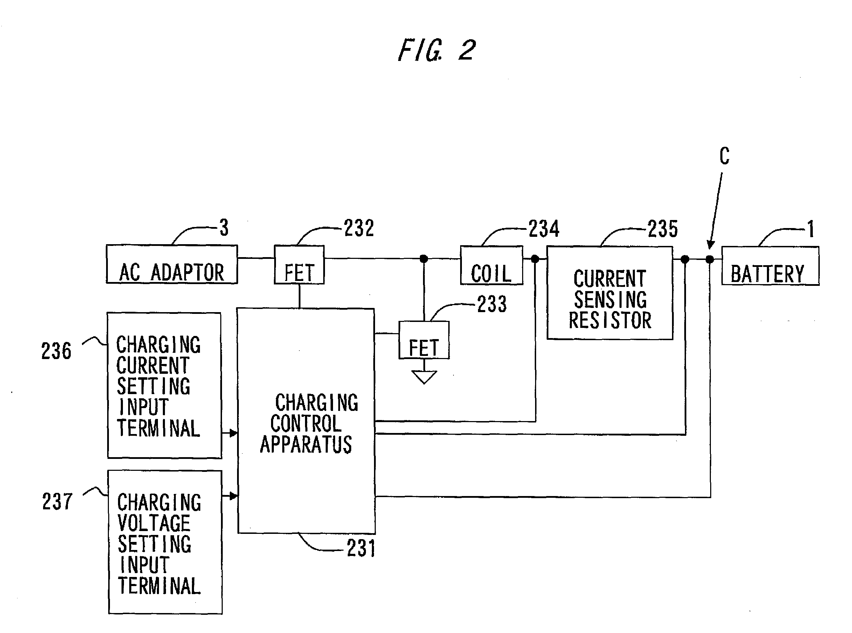

FIG. 2 shows a block diagram of the charging circuit 23 as an example. The charging circuit 23 includes a charging control apparatus 231 that receives setting from the microcomputer 22 and controls the charging current and the charging voltage, FETs 232 and 233 that are switched between the ON state and the OFF state by the charging control apparatus 231, a coil 234 that generates an electromotive force by a pulse waveform generated by the FETs 232 and 233, and a current sensing resistor 235 that receives the output from the coil 234, thereby generating a voltage drop proportional to flowing current. Although it is omitted in FIG. 2, it is possible to dispose a capacitor connecting a node between the current sensing resistor 235 and the coil 234 with the ground.

The FETs 232 and 233 and the coil 234 described above constitute the DC to DC converter (synchronous rectifying circuit). An output voltage value or an output current value of this DC to DC converter is determined by a duty ratio of a pulse signal for the charging control apparatus 231 to turn on or off the FETs 232 and 233.

The charging control apparatus 231 is provided with a charging current setting input terminal 236 and a charging voltage setting input terminal 237. The microcomputer 22 shown in FIG. 1 supplies a reference voltage to the charging current setting input terminal 236 via the D/A converter. In addition, the microcomputer 22 shown in FIG. 1 supplies a reference voltage to the charging voltage setting input terminal 237 via the D/A converter.

The charging control apparatus 231 compares a voltage across the current sensing resistor 235 with the reference voltage at the charging current setting input terminal 236 so as to control the pulse signals to be supplied to the FETs 232 and 233. More specifically, the charging control apparatus 231 controls a duty ratio of the pulse signal with negative feedback such that a difference between the voltage across the current sensing resistor 235 and the reference voltage becomes decreased.

In addition, the charging control apparatus 231 compares a potential at a point C between the current sensing resistor 235 and the battery pack 1 (i.e., a voltage between the point C and the ground) with the reference voltage at the charging voltage setting input terminal 237 so as to control the pulse signals to be supplied to the FETs 232 and 233. More specifically, the charging control apparatus 231 controls the pulse signal with negative feedback such that a difference between a potential at the input of the battery pack 1 (point C) and the reference voltage becomes decreased.

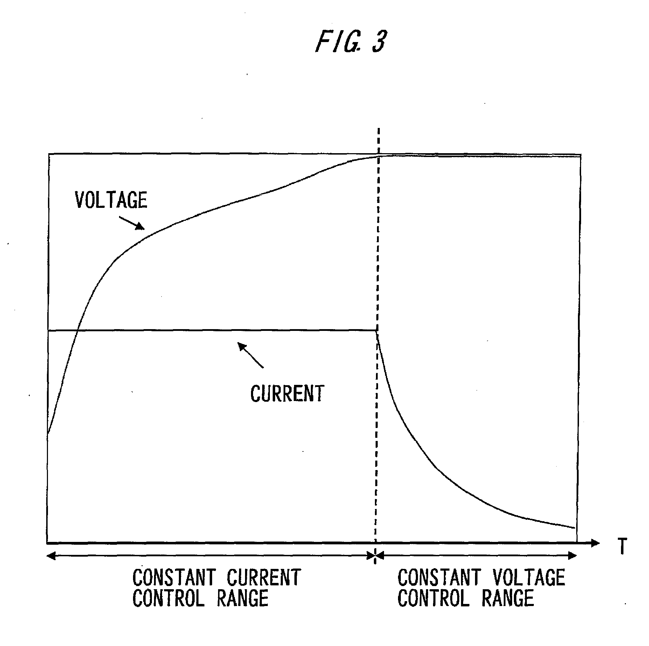

FIG. 3 illustrates an example of an operation of the charging control apparatus 231. The charging control apparatus 231 controls the charging current and the charging voltage of the battery according to a target voltage and a target current which are designated externally. As shown in FIG. 3, the charging control apparatus 231 performs a control sequence by dividing the time axis into a constant current range and a constant voltage range. First, when the charging is started and before sufficient charge is accumulated in the battery pack 1, the charging control apparatus 231 controls the duty ratio of the pulse due to the FETs 232 and 233 so that the voltage drop across the current sensing resistor 235 becomes a charging current setting input value. As a result, the charging is performed with a constant current from the start of charging until the battery voltage becomes a predetermined limit value. Since the charging is performed with a constant current, the charging voltage increases along with accumulation of charge in the battery.

In contrast, when the battery pack 1 is charged to a predetermined extent, the charging control apparatus 231 controls the charging in a constant voltage control range. In this case, the charging control apparatus 231 controls a duty ratio of the pulse due to the FETs 232 and 233 so that the voltage at the point C as the input of the battery pack becomes a charging voltage set value. As a result, the charging current decreases gradually in this state. More specifically, since the charge is accumulated in the battery with a constant voltage, the charging current decreases gradually.

### <Conventional problems>

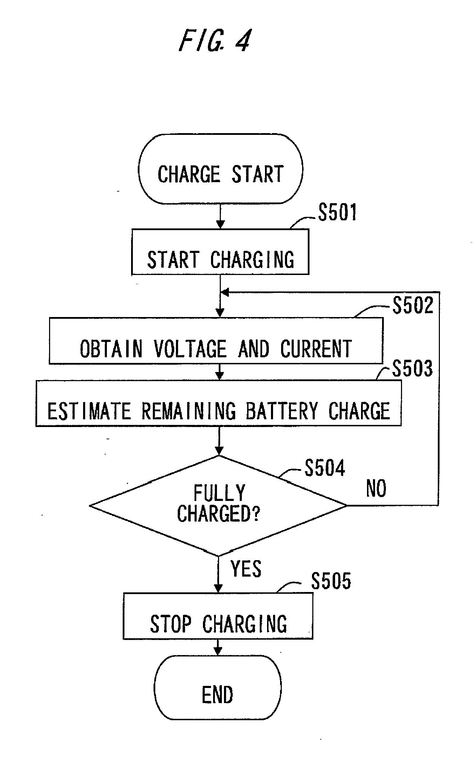

FIG. 4 illustrates a conventional control sequence performed by the microcomputer 22. This process is realized by a control program executed by the microcomputer 22. In this process, the microcomputer 22 starts the charging first (S501). The charging is started by a trigger when the AC adaptor 3 supplies electric power, for example. Then, the microcomputer 22 performs the following steps.

More specifically, the microcomputer 22 obtains a terminal voltage of the battery pack 1 corresponding to a point B shown in FIG. 1. In addition, the microcomputer 22 detects the charging current from the current sensing resistor 235 shown in FIG. 2 (S503). Then, the microcomputer 22 estimates a remaining battery charge from the terminal voltage and the charging current of the battery pack 1 (S504). The estimation of the remaining battery charge is performed by looking up a table for instance, in which a relationship among a terminal voltage value, a charging current value and a ratio of a charge amount to full charge amount of the battery pack 1 is stored as a table on a memory of the microcomputer 22. Alternatively, an experimental equation showing a relationship among a terminal voltage value, a charging current value and a ratio of a charge amount to full charge amount of the battery pack 1 is embedded in the control program of the microcomputer 22.

Then, the microcomputer 22 decides whether or not the battery pack 1 is fully charged (S504). If it is decided that it is not fully charged, the control process of the microcomputer 22 goes back to the step S502. On the contrary, if it is decided that it is fully charged, the microcomputer 22 stops the charging (S505).

However, this procedure has a problem as described below. As described above with reference to FIG. 2, the charging control apparatus 231 controls the charging current and the charging voltage at a point C shown in FIG. 2 (corresponding to the point B shown in FIG. 1). In contrast, the battery pack 1 is provided with the protection circuit 13 so as to monitor the voltage of the battery cell 11. When the voltage of the battery cell 11, e.g., the voltage at the point A1 shown in FIG. 1 reaches the limit value, the protection circuit 13 turns off the switch 12. This process is referred to as an overcharge protection operation. In this case, the charging voltage measured at the point C (point B shown in FIG. 1), which is supplied to the charging control apparatus 231, has a measurement error. In addition, the voltage measured at the point A1 shown in FIG. 1, which is supplied to the protection circuit 13, also has a measurement error. Therefore, even if the microcomputer 22 designates the charging voltage and the charging current precisely for the charging control apparatus 231, a case may occur where the protection circuit 13 stops the charging before the charging control apparatus 231 makes the charged state sufficiently close to the full charge state because of the measurement error.

For instance, the charging voltage with respect to a cell voltage of 4.2 volts has an error between -0.05 volts and 0.05 volts. In contrast, if the protection circuit 13 has an error between -0.03 volts and 0.03 volts, it is necessary to perform the overcharge protection operation at 4.28 volts or higher, which is the upper limit voltage 4.25 of the charging circuit 23 plus 0.03 volts. Otherwise, the charging may be stopped.

On the contrary, if the protection circuit 13 stops the charging at 4.25 volts, the charging may be stopped actually at the charging voltage of 4.22 volts. Therefore, the charging circuit 23 may perform the charging with the charging voltage of the cell voltage 4.25 volts taking an error into account, so the charging is forced to stop at 4.22 volts without reaching the full charge state.

### <Example of change in current and voltage upon charging>

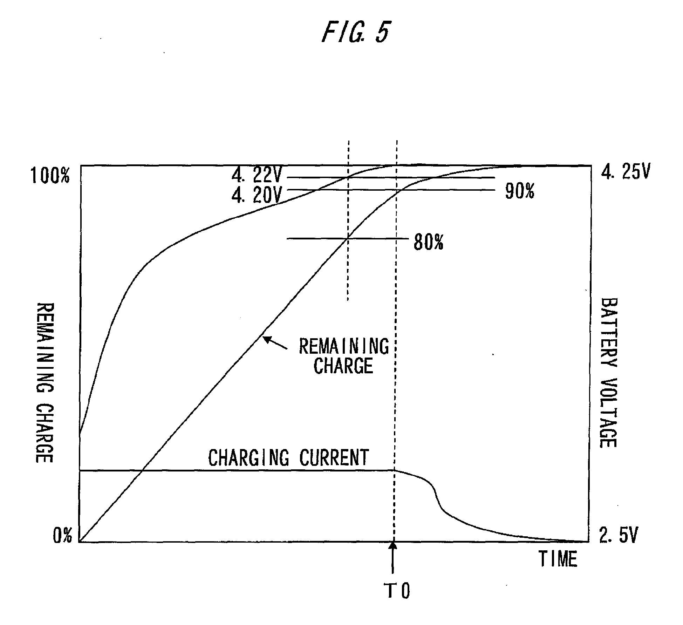

FIG. 5 illustrates an example of changes in time of the charging voltage, the remaining charge amount and the charging current when the charging is performed with the charging voltage 4.25 volts without the protection by the protection circuit 13. In this case, the charging is performed with a constant current until the charging voltage becomes 4.25 volts. When the charging voltage becomes 4.25 volts (at time point T0), the charging circuit 23 works in the constant voltage control range while the charging current decreases gradually until the battery is charged to the full charge state.

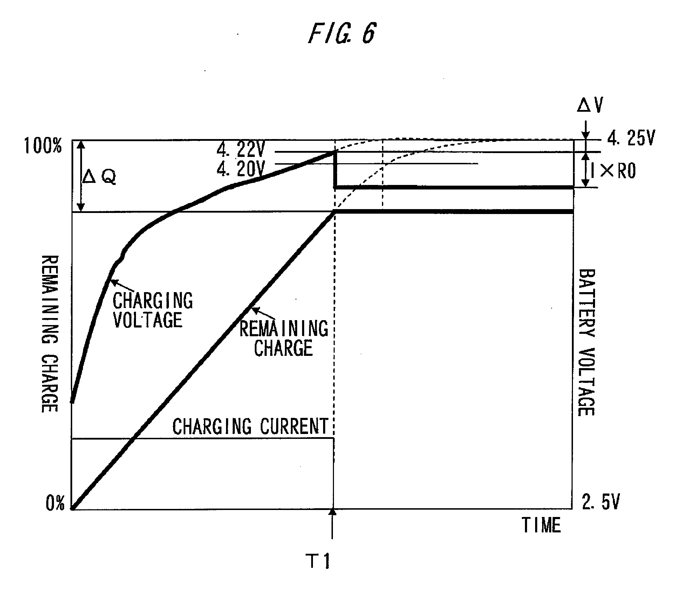

FIG. 6 illustrates an example of changes in time of the charging voltage, the remaining charge amount and the charging current when the protection by the protection circuit 13 works. Here, it is supposed that a measurement result of the cell voltage by the protection circuit 13 has an error of 0.03 volts, and that the protection circuit 13 works at the charging voltage of 4.22 (at time point T1).

Then, the protection circuit 13 turns off the switch 12, and hence the charging current becomes zero. Even if the charging voltage is 4.22 before the switch 12 is turned off, the charging voltage, therefore, the terminal voltage of the battery pack 1 is decreased by a certain value due to the turning off of the switch 12. The decreasing value of the terminal voltage can be expressed as the product (I × R0) of the charging current I and the internal resistance R0 of the battery pack 1. Therefore, the terminal voltage is decreased by the measurement error ΔV of the protection circuit 13 and the voltage drop I × R0 due to the internal resistance R0 from the charging voltage with which the charging circuit 13 intends to perform the charging. As a result, the charged state becomes insufficient by a shortage amount ΔQ with respect to the full charge. This shortage causes a decrease in period of time capable of supplying electric power from the battery pack 1 to the load 20.

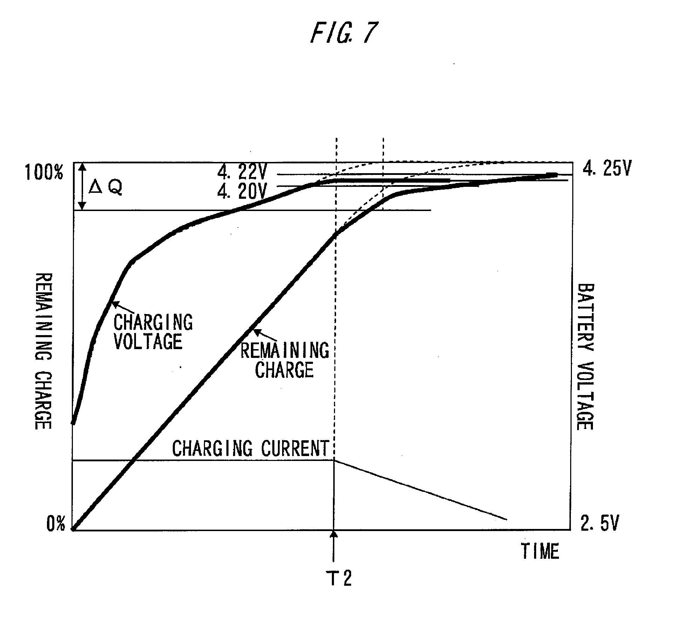

FIG. 7 illustrates an example of change in current and voltage when the microcomputer 22 performs the charging control with the charging circuit 23 according to this embodiment. As shown in FIG. 1, the microcomputer 22 monitors potentials of individual units of the battery cell 11 (e.g., potentials at the points A1 and A2) via the I2C bus. For instance, if the potential at the input of the cell block BLK1 (point A1) reaches a predetermined value, e.g., 4.2 volts (at time point T2), the microcomputer 22 changes the set value of the charging circuit 23 for the charging current setting input terminal 236, so as to decrease the charging current gradually with time.

As a result, the voltage drop I × R0 due to the internal resistance R0 of the battery pack 1 decreases along with a decrease in the charging current. Therefore, a gradient of increase in the charging voltage decreases after the charging voltage exceeds 4.2 volts as shown in FIG. 7. Therefore, the charging voltage does not reach 4.22 volts. As a result, the charging current is maintained without the protection operation by the protection circuit 13. In other words, the charging continues with a charging current smaller than in the case of FIG. 6, and hence the charging can be performed to a charged state higher than the case where the protection circuit 13 performs the protection operation as shown in FIG. 6.

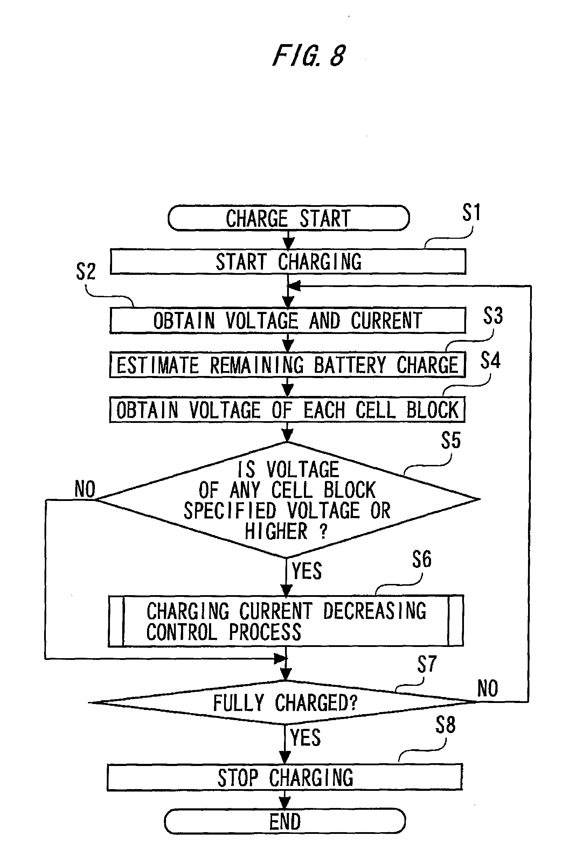

FIG. 8 illustrates an example of the charging control process performed by the microcomputer 22. In this procedure, the microcomputer 22 first sets a reference voltage for controlling the constant current value to the charging current setting input terminal 236, and sets a reference voltage for controlling the constant voltage value to the charging voltage setting input terminal 237. Thus, the microcomputer 22 instructs the charging control apparatus 231 to start the charging (S1).

Next, the microcomputer 22 detects a value of the charging current from the voltage across the current sensing resistor 15 (see FIG. 1). In addition, the microcomputer 22 detects a voltage across the cell blocks BLK1 and BLK2 connected in series (a voltage between the ground and the point A1 shown in FIG. 1) detected by the A/D converter 14, via the I2C bus (S2).

Then, the microcomputer 22 estimates the remaining battery charge (S3). The remaining battery charge should be calculated by the computer program as described above, based on a table storing a charging current value, a charging voltage of the battery pack 1 (a voltage at the point A1 shown in FIG. 1), and a remaining battery charge as a set, or an experimental equation for calculating the remaining battery charge from the charging current value and the charging voltage of the battery pack 1.

Next, the microcomputer 22 obtains voltages of the respective cell blocks BLK1 and BLK2 detected by the A/D converter 14 (a voltage between the points A1 and A2, and a voltage between the point A2 and the ground) (S4).

Next, the microcomputer 22 decides whether or not a voltage of any one of the cell blocks BLK1 and BLK2 is a specified voltage or higher (S5). The microcomputer 22 performing this process corresponds to a decision unit.

Here, the specified voltage is set to a value lower than a protection voltage at which the protection circuit 13 turns off the switch 12 by a predetermined value. For instance, the protection voltage is 4.25 volts as shown in FIG. 7, and the specified voltage is 4.2 volts. The specified voltage of 4.2 volts should be a value sufficient for suppressing generation of the protection circuit 13 due to a decrease in current with respect to the protection voltage 4.25 volts, which should be determined experimentally. Then, if the voltage of any one of the cell blocks is a specified voltage or higher, the microcomputer 22 performs a charging current decreasing control process (S6). The microcomputer 22 performing this process corresponds to a current limiting unit.

Then, the microcomputer 22 decides whether or not it is fully charged (S7). If it is not fully charged, the control process performed by the microcomputer 22 goes back to the step S2. On the contrary, if it is fully charged, the microcomputer 22 stops the operation of generating the pulse waveform in the charging circuit 23. In addition, the microcomputer 22 turns off the FET 232 and the FET 233 shown in FIG. 2, and then turns off the switch 12. Further, the microcomputer 22 clears setting of the charging current setting input terminal 236 and the charging voltage setting input terminal 237. Thus, the microcomputer 22 stops the charging (S8).

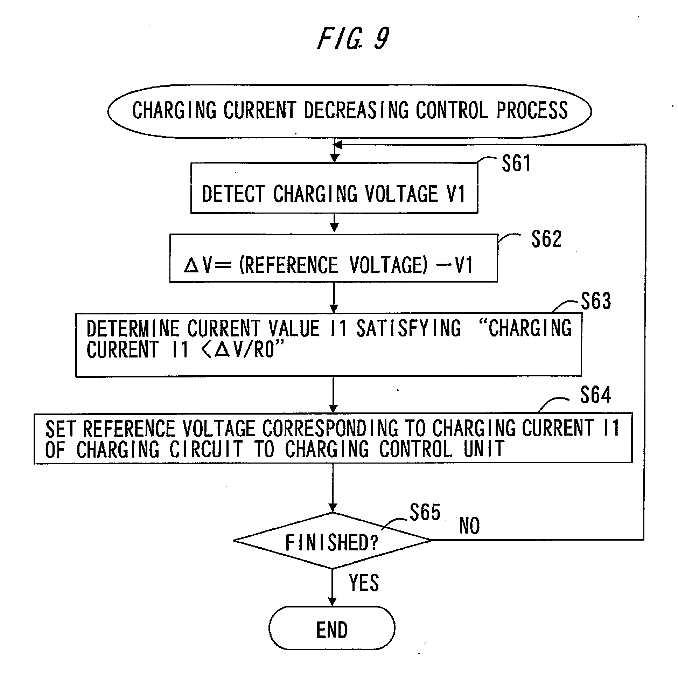

FIG. 9 illustrates details of the charging current decreasing control process (S6 of FIG. 8). In this process, the microcomputer 22 detects a charging voltage V1 (S61). More specifically, the microcomputer 22 obtains a digital value generated by the A/D converter 14 shown in FIG. 1 from the terminal voltage of the battery pack 1 (potential at the point A1 shown in FIG. 1), through the I2C bus.

Next, the microcomputer 22 calculates a difference ΔV between the protection voltage and the detected charging voltage V1 (S62). In addition, the microcomputer 22 calculates a limit current value (ΔV/R0) by dividing the difference ΔV by the internal resistance R0. Then, a current value I1 is determined within a range smaller than the limit current value (S63). This current value I1 may be the limit current value itself or a value obtained by multiplying the same by a predetermined safety factor (e.g., 0.9). Then, the microcomputer 22 sets a reference voltage to the charging current setting input terminal 236 so as to control the charging current to be I1 (S64). As a result, the charging current is controlled to be I1. Therefore, the charging voltage V1 does not exceed the protection voltage when the voltage is increased by the charging current. Then, the microcomputer 22 finishes the process, and the control process goes to the step S7 of FIG. 8. The process from the step S61 to the step S64 is repeated in a loop in S2-S7 of FIG. 8. As a result, the current value I1 decreases gradually as the charged state proceeds. In addition, the current value I1 is determined according to the difference ΔV between the protection voltage and the detected charging voltage V1.

As described above, the charging circuit of this embodiment decreases charging current so that the charging voltage does not reach the protection voltage when the terminal voltage of the battery pack 1 exceeds a predetermined specified value. Therefore, the protection circuit 13 does not turn off the switch 12, and hence the charging circuit 23 can continue the charging. Then, as the charging voltage approaches the protection voltage, the charging current decreases gradually by the process in the step S63 (FIG. 9). Therefore, the protection circuit 13 does not work, and hence the battery pack 1 can be charged to be almost in the full charge state.

In addition, the charging voltage is detected by the A/D converter 14 in this embodiment. Then, the charging voltage detected by the A/D converter 14 is used for both the protection circuit 13 and the microcomputer 22. Therefore, it is possible to reduce a difference of measurement error between the protection circuit 13 and the microcomputer 22.

### <Variations>

In the first embodiment, the charging current I1 is decreased so that an increase of the charging voltage due to the charging current I1 and the internal resistance R0 does not exceed the difference ΔV between the protection voltage and the detected charging voltage V1 as shown in FIG. 9.

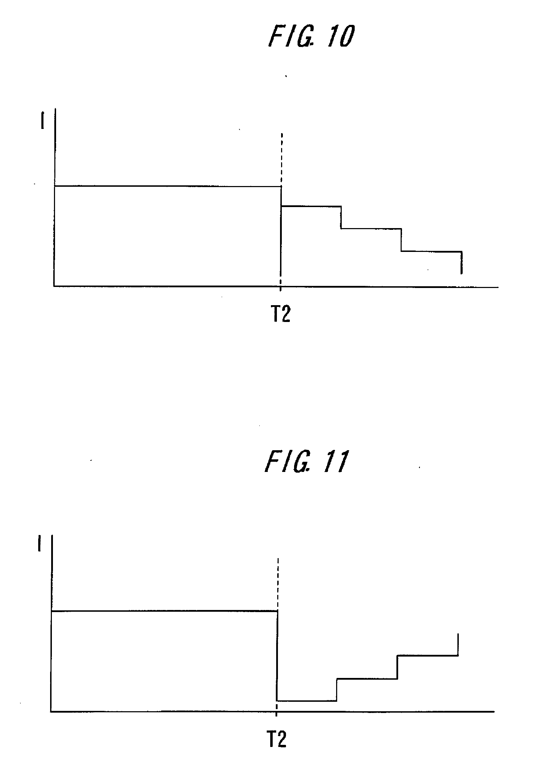

However, if the progress of the increase of the charging voltage in the charging is known in advance from a result of an experiment or a practical experience for instance, it is possible to decrease the charging current simply over time. FIG. 10 illustrates the control in such a case. In this example, it is supposed that the charging voltage reaches the specified voltage at the time point T2. In this case, the microcomputer 22 decreases the charging current stepwise over time as shown in FIG. 10. A gradient of the decrease may be larger than that of an increase of the charging voltage over time. The increase of the charging voltage over time may be measured experimentally in advance and stored on the memory of the microcomputer 22. Alternatively, a variation per unit time that causes such a decrease of the charging current may be stored on the memory of the microcomputer 22.

On the contrary, when the charging voltage reaches the specified voltage at the time point T2, the charging current may be significantly decreased to be almost zero as shown in FIG. 11. After that, the charging current may be increased gradually over time. However, in this case, the charging current may be increased stepwise without exceeding the difference ΔV between the protection voltage and the detected charging voltage V1 by the charging current.

In the embodiment described above, when the charging voltage exceeds the specified voltage and approaches the protection voltage, the charging current is decreased to a value within the range within which the protection circuit 13 does not work, and the charging continues. In this case, if the switch 12 is turned off after the overcharge protection function of the protection circuit 13 works once, the switch 12 is not turned on until the charging voltage decreases to be a predetermined limit value due to the hysteresis characteristic. Therefore, it is possible to adopt another structure in which even if the overcharge protection process is performed once, the microcomputer 22 monitors voltages of the cell blocks BLK1 and BLK2, and resets the protection circuit 13 so as to reset the hysteresis characteristic to the initial state if the charging voltage decreases from the protection voltage.

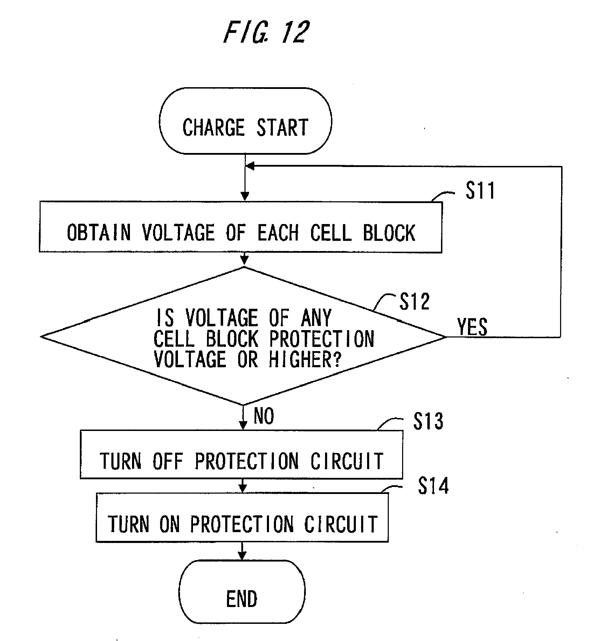

FIG. 12 illustrates a reset process of the protection circuit 13 performed by the microcomputer 22. This process is performed after the overcharge protection process of the protection circuit 13 starts. Whether or not the overcharge protection process of the protection circuit 13 is started can be decided by the microcomputer 22 reading a register value indicating a status of the protection circuit via the I2C bus, for instance. In addition, it is possible to detect the charging current via the current sensing resistor 15, for instance. More specifically, if the charging current value is extremely small (e.g., equal to or smaller than a value corresponding to leakage current of the switch 12) even though the charging is performed via the charging circuit 23 with the constant current and the constant voltage as shown in FIG. 6, it may be decided that the overcharge protection process of the protection circuit 13 has started.

In this process, the microcomputer 22 obtains voltages of the cell blocks BLK1 and BLK2 via the I2C bus (S11).

Then, the microcomputer 22 decides whether or not the voltage of any one of the cell blocks is the protection voltage or higher (S12). The microcomputer 22 performing this process corresponds to a state decision unit. If the voltage of any one of the cell blocks is the protection voltage or higher, the control process by the microcomputer 22 goes back to the step Sl1.

In contrast, if all cell block voltages are lower than the protection voltage, the microcomputer 22 turns off the protection circuit 13 first (S13). Thus, the protection circuit 13 stops the process, and the switch 12 becomes turned on once. On this occasion, the protection circuit 13 stops the comparison process between the voltage of the cell block BLK1, BLK2 or the like and the protection voltage, so as to set the switch 12 to be turned on.

Next, the microcomputer 22 turns on the protection circuit 13 (S14). Thus, the protection circuit 13 starts the comparison process between the voltage of the cell block BLK1, BLK2 or the like and the protection voltage from the beginning. As a result, the voltage of the cell block BLK1, BLK2 or the like is compared with the protection voltage in the state without a hysteresis, and hence the overcharge protection process is performed from the beginning. The microcomputer 22 performing the process in the steps S13 and S14 corresponds to a canceling unit.

In this way, when the protection circuit 13 is turned on after it is turned off once, the hysteresis of the overcharge protection process can be initialized for performing the process again. Therefore, even if the charging voltage is decreased after the overcharge protection works once, it is possible to avoid the continuous state where the charging current is not supplied again, as a result of an effect of the hysteresis.

### «Second embodiment»

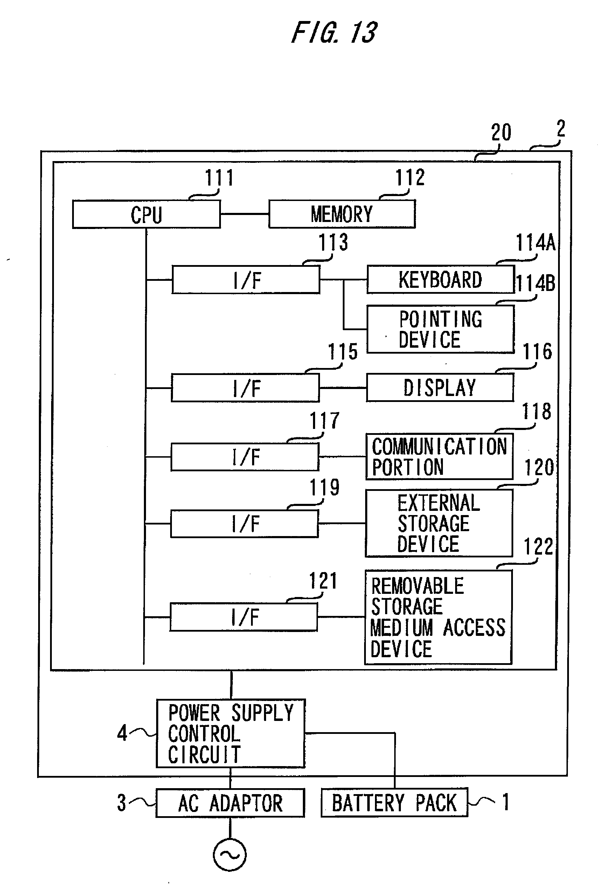

FIG. 13 illustrates an example of a detailed structure of the electronic device. Electric power is supplied to the main body part 2 of the electronic device via the AC adaptor 3. The main body part 2 includes a battery pack 1, a power supply control circuit 4, and a load 20.

The load 20 includes a CPU 111 executing a program, a memory 112 that stores the program executed by the CPU 111 or data processed by the CPU 111, a keyboard 114A connected to the CPU 111 via an interface 113, and a pointing device 114B. The pointing device 114B is a mouse, a trackball, a touch panel, a flat device having an electrostatic sensor, or the like.

In addition, the load 20 includes a display 116 connected thereto via an interface 115. The display 116 displays information supplied from the keyboard 114A or data processed by the CPU 111. The display 116 is a liquid crystal display or an electroluminescence (EL) panel, for instance.

In addition, the load 20 includes a communication unit 118 connected thereto via an interface 117. The communication unit 118 is a local area network (LAN) board, a wireless communication interface (including an antenna), a wireless reception unit (including an antenna) or the like.

In addition, the load 20 includes an external storage device 120 connected thereto via an interface 119. The external storage device 120 is a hard disk drive, for instance. Further, the main body part 2 includes a removable storage medium access device 122 connected thereto via an interface 121. The removable storage medium is, for instance, a compact disc (CD), a digital versatile disk (DVD), a flash memory card or the like.

An example of an electronic device to which the present invention may be applied is a portable device, e.g., a notebook type (or laptop) personal computer, a personal digital assistant, a mobile phone, a portable game machine, an electronic dictionary, a portable music player, a portable video player, a portable television receiver, a portable radio or the like.

As described above, a voltage of the cell block referred to by the protection circuit 13 is supplied to the microcomputer 22 via the I2C bus. The microcomputer 22 controls the charging circuit 23 based on the supplied voltage of the cell block. According to this structure, the battery pack 1 can be charged to a voltage that is very close to the protection voltage. As a result, the electronic device can be used for a long period of time using the battery pack 1.

### «Third embodiment»

In the first embodiment, it is decided whether or not a voltage of any one of the cell blocks BLK1 and BLK2 is a specified value or higher, and the process of decreasing the charging current is performed if the voltage is the specified value or higher. Thus, the protection circuit 13 can control the charging current within the range within which the overcharge protection process is not started. Thus, the charging circuit and the electronic device described above can continue the charging to the state close to the full charge state.

Instead of this control, in this embodiment, the protection circuit 13 detects whether or not the overcharge protection process is started, the protection circuit 13 decreases the charging current if the overcharge protection process is started, so as to control to be in the state where the overcharge protection process is not performed. According to this procedure, similarly to the first embodiment, the charging can also be continued to the state close to the full charge state. Other structures and actions are the same as those of the first embodiment. Therefore, the same structural elements are denoted by the same reference numeral or symbol, and hence the description thereof is omitted. In addition, the drawings of FIGS. 1 to 13 are referred to as necessary. Note that the overcharge protection circuit of the control according to this embodiment can also be applied to the electronic device of the second embodiment shown in FIG. 13.

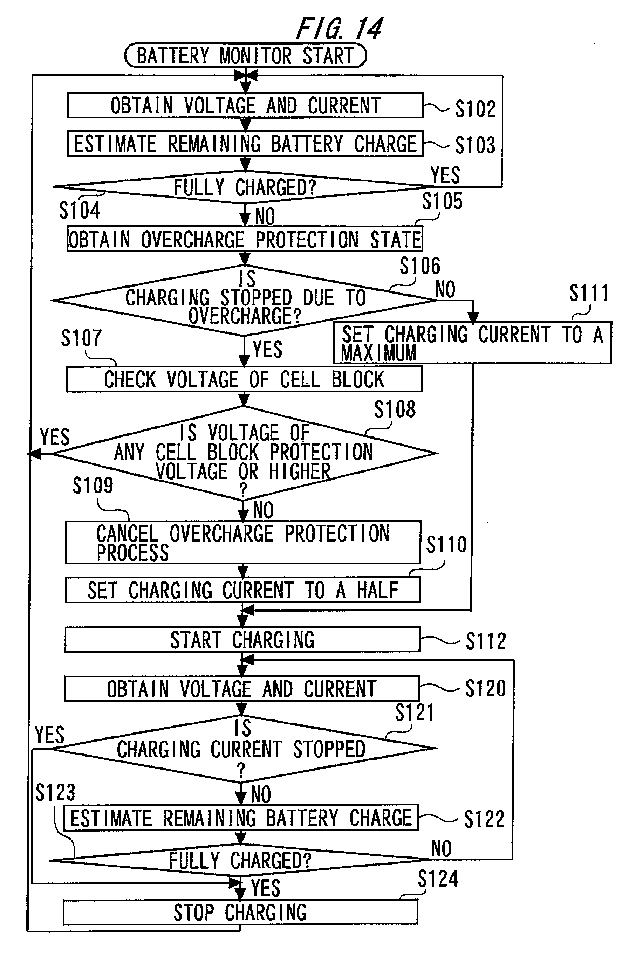

FIG. 14 illustrates a reset process of the protection circuit 13 performed by the microcomputer 22. The microcomputer 22 normally obtains voltages of the cell blocks BLK1 and BLK2 and charging current via the I2C bus (S102). The voltages of the cell blocks BLK1 and BLK2 are obtained via the A/D converter 14. In addition, the charging current is also obtained via the A/D converter 14 based on the voltage across the current sensing resistor 15.

Then, the microcomputer 22 estimates the remaining battery charge, i.e., the charged state of the battery (S103). The charged state means a present charged state of the cell with respect to the full charge state. Then, the microcomputer 22 decides whether or not the charged state is the full charge state (S104). If it is estimated to be the full charge state, the control process of the microcomputer 22 goes back to the step S102, and the monitoring of the voltage and the current is continued. In other words, the microcomputer 22 monitors a change in the charged state of the battery pack due to discharge after that.

In contrast, if it is decided not to be the full charge state in the step S104, the microcomputer 22 obtains the overcharge protection state of the protection circuit 13 (S105). The overcharge protection state of the protection circuit 13 means a state about whether or not the overcharge protection process of the protection circuit 13 is started so that the charging current is cut off. Whether or not the overcharge protection process of the protection circuit 13 is started can be decided by the microcomputer 22 reading a register value indicating a status of the protection circuit 13 via the I2C bus, for instance. In addition, it is possible to detect the charging current via the current sensing resistor 15, for instance. More specifically, if the charging current value is extremely small (e.g., equal to or smaller than a value corresponding to leakage current of the switch 12) even though the charging is performed via the charging circuit 23 with constant current and constant voltage as shown in FIG. 6, it may be decided that the overcharge protection process of the protection circuit 13 has started.

Then, the microcomputer 22 decides whether or not the charging is stopped by the overcharge protection process (S106). The microcomputer 22 performing this process corresponds to a protection state decision unit. If the charging is stopped by the overcharge protection process, the microcomputer 22 resets the overcharge protection process similarly to the steps S13 and S14 of FIG. 12.

Here, the microcomputer 22 first reads voltages of individual cell blocks via the I2C bus and decides whether or not a voltage of any one of the cell blocks is the protection voltage or higher (S107). The microcomputer 22 performing this process corresponds to a voltage state decision unit. If a voltage of any one of the cell blocks is the protection voltage or higher (NO in S108), the control process of the microcomputer 22 goes back to the step S102.

In contrast, if voltages of all the cell blocks are lower than the protection voltage (YES in S108), the microcomputer 22 cancels the overcharge protection process (S109), and the charging current is set to a predetermined value, e.g., about a half of the charging current when the charging is performed with the constant current (S110). The microcomputer 22 performing the process in the steps S109 and S110 corresponds to a charging control unit. Note that the charging with the constant current is described above for the constant current shown in FIG. 5.

In contrast, if the charging is not stopped by the overcharge protection process, the microcomputer 22 sets the charging current to the maximum value. Then, the microcomputer 22 starts the charging (S112). Then, the microcomputer 22 obtains the voltages of the cell blocks BLK1 and BLK2 and the charging current via the I2C bus (S120). Then, the microcomputer 22 decides whether or not the charging current is stopped (S121). If the charging current is stopped, the microcomputer 22 stops the control of the charging (S124), and the control process goes back to the step S102. Here, causes of the stop of the charging current include, for instance, a detection of an abnormal state of the battery cell 11 (e.g., heating) and an abnormal state of the balance of the voltage between the battery cells 11 and 11 in addition to the overcharge similar to the step S106. For instance, there is a case where a temperature of the battery cell 11 exceeds a predetermined limit value by heating. In addition, there is a case where a voltage of any one of the battery cells 11 connected to each other in series is extremely lower than the other battery cells 11. Here, in the case of the overcharge, the microcomputer 22 decides that the charging current can be cut off since the protection performed by the overcharge protection circuit 13 is on the basis of limiting the charging current in the step S110. Further, in the case of the abnormal state of the battery cell 11, the microcomputer 22 stops the charging current since it is difficult to further continue the charging.

In contrast, if the charging is not stopped by the overcharge protection process, the microcomputer 22 estimates the remaining battery charge (S122). Then, the microcomputer 22 decides whether or not the charged state is the full charge state (S123). If it is decided to be the full charge state, the microcomputer 22 stops the control of the charging (S124), and the control process goes back to the step S102, so as to continue monitoring the voltage and the current.

On the contrary, if it is decided not to be the full charge state in the step S123, the control process of the microcomputer 22 goes back to the step S120 so as to continue the process.

As described above, in the charging circuit of this embodiment and the electronic device equipped with the charging circuit, the protection circuit 13 decides whether or not the charging current is cut off by the overcharge protection process. Further, if the charging current is cut off by the overcharge protection process, it is decided whether or not the voltage of the cell block is the protection voltage or higher. Then, if the voltage of the cell block is lower than the protection voltage, the protection circuit 13 is reset. In addition, the charging is restarted with a sufficiently small current value (e.g., a half of the current value when the charging is performed with the normal constant current in the case of FIG. 14 described above) such that a voltage corresponding to the voltage drop due to the charging current does not make the voltage of the cell block reach the protection voltage. In other words, according to the process of this embodiment, unlike the case of the first embodiment in which the charging current decreasing process is performed with the specified voltage lower than the protection voltage, an additional charging is performed after the protection circuit 13 once performs the overcharge protection process if it is possible. According to this process, the battery cell can also be charged to a state close to the full charge state similarly to the first embodiment.

Note that the current value is set to a half of the normal constant current value for charging in the process of the step S106 according to the third embodiment. However, the process of this charging control circuit is not limited to this value. More specifically, after the protection circuit 13 once performs the overcharge protection process, the charging may be further continued within a range of sufficiently small charging current that is capable of performing the charging. This range of the charging current may be determined experimentally in advance. For instance, it may be determined in advance based on the internal resistance of the battery cell 11.

## Claims

1. A control apparatus for a battery circuit including:
a voltage detector that detects a battery voltage;
a battery protection circuit that stops charging current when the battery voltage detected by the voltage detecting unit exceeds a protection voltage; and
a charging circuit being capable of changing a charging current value for charging a battery, the control apparatus comprising:
an input interface that reads the battery voltage detected by the voltage detecting unit;
a decision unit that decides whether or not the read battery voltage has approached the protection voltage to a predetermined limit value;
an output interface that outputs a signal for controlling the charging current; and
a current control unit that limits the charging current to a predetermined limit value via the output interface when the read battery voltage is decided to have approached the protection voltage to the predetermined limit value.

2. A control apparatus for a battery circuit according to claim 1, wherein
the battery is made up of a plurality of cell blocks connected in series, each of which includes one cell or a plurality of cells,
the voltage detecting unit includes a measuring circuit that detects a voltage of each of the cell blocks,
the decision unit decides whether or not a voltage of any one of the cell blocks has approached the protection voltage of the cell block to a predetermined limit value, and
the current control unit limits the charging current to the predetermined limit value when the voltage of any one of the cell blocks is decided to have approached the protection voltage of the cell block to the predetermined limit value.

3. A charging control apparatus controlling charging current comprising:
a voltage detector that detects a battery voltage;
a battery protection circuit that stops charging current when the battery voltage detected by the voltage detecting unit exceeds a protection voltage;
a charging circuit being capable of changing a charging current value for charging a battery; and
a control unit for a battery circuit according to claim 1 or claim 2.

4. A charging control apparatus controlling charging current according to claim 3, wherein when the battery voltage is decided to have approached the predetermined limit value, the current control unit decreases the charging current stepwise over time.

5. A charging control apparatus controlling charging current according to claim 3, wherein when the battery voltage is decided to have approached the predetermined limit value, the current control unit decreases the charging current by a first change amount and then increases the charging current stepwise over time by a second change amount smaller than the first change amount.

6. A charging control apparatus controlling charging current according to claim 3, wherein when the battery voltage is decided to have approached the predetermined limit value, the current control unit decreases the charging current according to a difference between the protection voltage and the battery voltage.

7. A charging control apparatus controlling charging current according to claim 3, wherein when the voltage of any one of the cell blocks is decided to have approached the protection voltage of the cell block to the predetermined limit value, the current control unit decreases the charging current stepwise over time.

8. A charging control apparatus controlling charging current according to claim 3 or 7, wherein when the voltage of any one of the cell blocks is decided to have approached the protection voltage of the cell block to a predetermined limit value, the current control unit decreases the charging current by a first change amount and then increases the charging current stepwise over time by a second change amount smaller than the first change amount.

9. A charging control apparatus controlling charging current according to claim 3, wherein when the voltage of any one of the cell blocks is decided to have approached the protection voltage of the cell block to a predetermined limit value, the current control unit decreases the charging current according to a difference between the protection voltage and the battery voltage.

10. A charging control apparatus controlling charging current according to any of claims 3 to 9, wherein the control apparatus includes:
a state decision unit that decides whether or not the battery voltage or the voltage of any one of the cell blocks has exceeded the protection voltage after the battery protection circuit stopped the charging current; and
a canceling unit that cancels a protection process performed by the battery protection circuit if the battery voltage or the voltages of all the cell blocks have not exceeded the protection voltage.

11. An electronic device comprising:
A charging control apparatus according to any one of claims 3 to 10;
the battery that is charged via the charging circuit under control of the control apparatus; and
a load that is supplied with electric power from the charged battery.

12. A control apparatus for a battery circuit comprising:
a voltage detector that detects a battery voltage;
a battery protection circuit that stops charging current when the battery voltage detected by the voltage detecting unit exceeds a protection voltage; and
a charging circuit being capable of changing a charging current value for charging a battery, the control apparatus including:
an input interface that inputs a signal indicating an operating state of the battery protection circuit;
an output interface that outputs a signal for controlling the charging current;
a protection state decision unit that decides whether or not the battery protection circuit has stopped the charging current;
a voltage state decision unit that decides whether or not the battery voltage has reached the protection voltage after the battery protection circuit stopped the charging current; and
a charging control unit that cancels a stopping process of the charging current performed by the battery protection circuit and restarts a charging with the charging current limited to a predetermined limit value via the output interface when the battery voltage has not reached the protection voltage.

13. A control apparatus for a battery circuit according to claim 12, wherein,
the battery is made up of a plurality of cell blocks connected in series, each of which includes one cell or a plurality of cells,
the battery protection circuit stops the charging current when the voltage of any one of the cell blocks reaches the protection voltage of the cell block,
the voltage detecting unit includes a measuring circuit that detects a voltage of each of the cell blocks,
the voltage state decision unit decides whether or not the voltage of any one of the cell blocks has reached the protection voltage of the cell block after the battery protection circuit stopped the charging current, and
the charging control unit cancels the stopping process of the charging current performed by the battery protection circuit and restarts the charging with the charging current limited to the limit value when voltages of all the cell blocks are lower than the protection voltage of the cell block.

14. A charging control apparatus controlling charging current comprising:
a voltage detector that detects a battery voltage;
a battery protection circuit that stops charging current when the battery voltage detected by the voltage detecting unit reaches a protection voltage;
a charging circuit being capable of changing a charging current value for charging a battery; and
a control apparatus according to claim 12 or 13.

15. An electronic device comprising:
a charging control apparatus according to claim 14 and
a load that is supplied with electric power from the charged battery.
